# EUROPEAN PATENT APPLICATION

(11) **EP 4 707 007 A1**
(43) Date of publication of application: **11.03.2026**
(21) Application number: 25195431.9
(22) Date of filing: 12.08.2025
(51) Int. Cl.: B60K 1/00, B60K 1/04, B60K 5/02, B60K 13/04, B60K 15/03, B60K 17/22

(54) **PLUG-IN HYBRID ELECTRIC VEHICLE**

(30) Priority: 29.08.2024 JP 2024147274
(71) Applicant: TOYOTA JIDOSHA KABUSHIKI KAISHA, Toyota-shi, Aichi-ken 471-8571 (JP)
(72) Inventor: KOYANAGI, Hirotaka, Toyota-shi, 471-8571 (JP)
(74) Representative: D Young & Co LLP

(57) **Abstract**

A pickup truck-type plug-in hybrid electric vehicle includes an engine, a battery, a high-voltage electrical unit, a cabin section provided with a passenger compartment, an engine compartment portion, and a cargo section that includes a truck bed that opens upward. The engine compartment section includes an engine compartment in which an engine is arranged longitudinally. The battery is disposed in a region of at least one of the cabin section and the cargo section, and that region is above a propeller shaft, an exhaust pipe, a fuel tank, and side members. The high-voltage electrical unit is disposed adjacent to the battery.

## Description

### CROSS-REFERENCE TO RELATED APPLICATIONS

This application is based upon and claims the benefit of priority from Japanese Patent Application No. 2024-147274, filed on August 29, 2024, the entire contents of which are incorporated herein by reference.

### BACKGROUND

### 1. Field

The present disclosure relates to a pickup truck-type plug-in hybrid electric vehicle.

### 2. Description of Related Art

International Publication No. 2008/082012 discloses a plug-in hybrid electric vehicle (hereinafter referred to as PHEV) having a unibody vehicle body structure.

A PHEV includes two drive sources (an engine and a motor), as well as a highcapacity battery. A PHEV further includes high-voltage electrical units electrically connected to the battery. Examples of such high-voltage electrical units include a power control unit for the motor and a vehicle on-board charging unit. In the PHEV described in the above publication, the battery is installed beneath the rear seat.

There is a demand for vehicles capable of providing installation space for both the battery and the high-voltage electrical units.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a pickup truck-type plug-in hybrid electric vehicle includes a fuel tank, an engine, a battery, a motor, a transmission, a propeller shaft connected to the engine via the motor and the transmission and configured to transmit rotational driving force of the engine and the motor to a rear wheel, an exhaust pipe that guides exhaust gas of the engine rearward in the vehicle, a high-voltage electrical unit electrically connected to the battery, a cabin section provided with a passenger compartment, an engine compartment section forward of the cabin section, a cargo section rearward of the cabin section, and a frame including left and right side members that extend in a vehicle longitudinal direction through a region in the cabin section that is below the passenger compartment. The engine compartment section includes an engine compartment in which the engine is arranged longitudinally. The cargo section includes a truck bed that opens upward. The propeller shaft and the exhaust pipe extend in the vehicle longitudinal direction through the region in the cabin section that is below the passenger compartment. The battery is disposed in a region of at least one of the cabin section and the cargo section that is above the propeller shaft, the exhaust pipe, and the side members. The high-voltage electrical unit is disposed adjacent to the battery.

Other features and aspects will be apparent from the following detailed description, the drawings, and the claims.

### BRIEF DESCRIPTION OF THE DRAWINGS

Fig. 1 is a side view showing the arrangement of various components of a plug-in hybrid electric vehicle according to an embodiment.
Fig. 2 is a top view showing the arrangement of seats in the plug-in hybrid electric vehicle of the embodiment.
Fig. 3 is a top view showing the arrangement of a drivetrain, a frame, an exhaust pipe, a fuel tank, and other components of the plug-in hybrid electric vehicle of the embodiment.
Fig. 4 is a top view showing the arrangement of batteries and a high-voltage electrical unit of the plug-in hybrid electric vehicle of the embodiment as viewed from above.
Fig. 5 is a cross-sectional view taken along line 5-5 in Figs. 1 to 4, showing the structure of the battery and its surroundings.
Fig. 6 is a side view showing examples of regions in which a high-voltage electrical unit of the PHEV is arranged.
Fig. 7 is a cross-sectional view taken along line 7-7 of Fig. 6.
Fig. 8 is a cross-sectional view taken along line 8-8 of Fig. 6.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

In general, a pickup truck includes a truck bed that opens upward and is located rearward of a cabin. Many pickup trucks include a body having a frame structure. A variety of components, including a transmission, a propeller shaft, an exhaust pipe, and a fuel tank, are disposed beneath the floor of a pickup truck. Therefore, when plug-in hybrid equipment is installed in a pickup truck, it may be necessary to raise the floor height in order to provide space beneath the floor for accommodating batteries and a high-voltage electrical unit. However, users expect a pickup truck-type vehicle to include a cabin and a truck bed capable of carrying large-volume loads. Raising the floor to accommodate the batteries and a high-voltage electrical unit reduces the available volume of the cabin and the truck bed, making it difficult to meet user demands.

The present embodiment provides a pickup truck-type PHEV 10 configured to make space available for installing batteries and a high-voltage electrical unit.

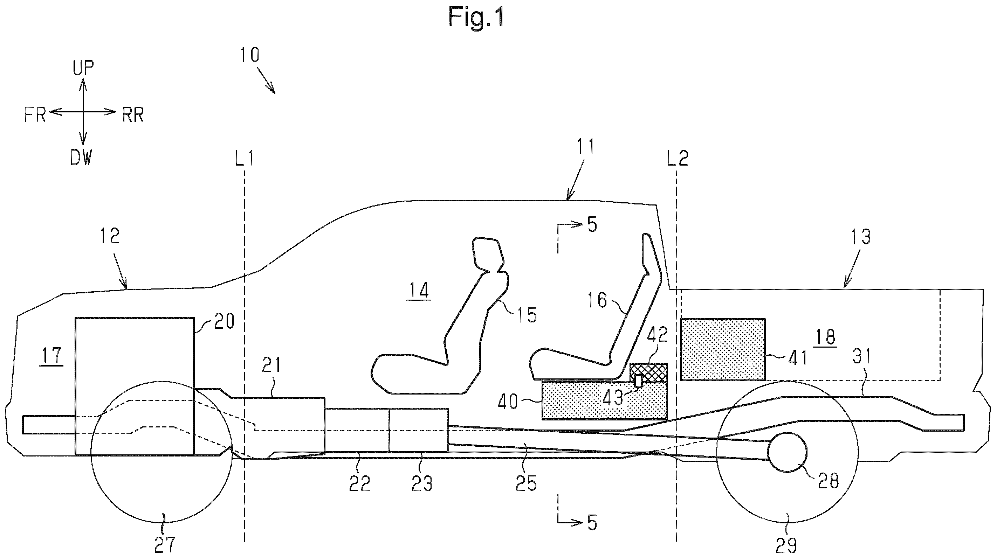

Hereinafter, the pickup truck-type PHEV 10 according to the embodiment will be described with reference to Figs. 1 to 5. In the following description, a "plug-in hybrid electric vehicle" is referred to as a "PHEV." Arrows shown in the drawings indicate directions in relation to the PHEV 10. Specifically, FR indicates the forward direction, RR indicates the rearward direction, UP indicates the upward direction, DW indicates the downward direction, LF indicates the leftward direction, and RF indicates the rightward direction.

As shown in Fig. 1, the PHEV 10 includes three sections, i.e., a cabin section 11, an engine compartment section 12 forward (FR) of the cabin section 11, and a cargo section 13 rearward (RR) of the cabin section 11. The cabin section 11 is provided with a passenger compartment 14, which accommodates occupants. The engine compartment section 12 includes an engine compartment 17 in which the engine 20 is arranged longitudinally. The PHEV 10 of the present embodiment is equipped with an engine 20 having a V-type cylinder arrangement. The cargo section 13 includes a truck bed 18 that opens upward (UP). In Figs. 1 to 4, the cabin section 11 is a region in the PHEV 10 that is rearward (RR) of dotted line L1 and forward (FR) of dotted line L2. The engine compartment section 12 is a region in the PHEV 10 that is forward (FR) of dotted line L1. The cargo section 13 is a region in the PHEV 10 that is rearward (RR) of dotted line L2.

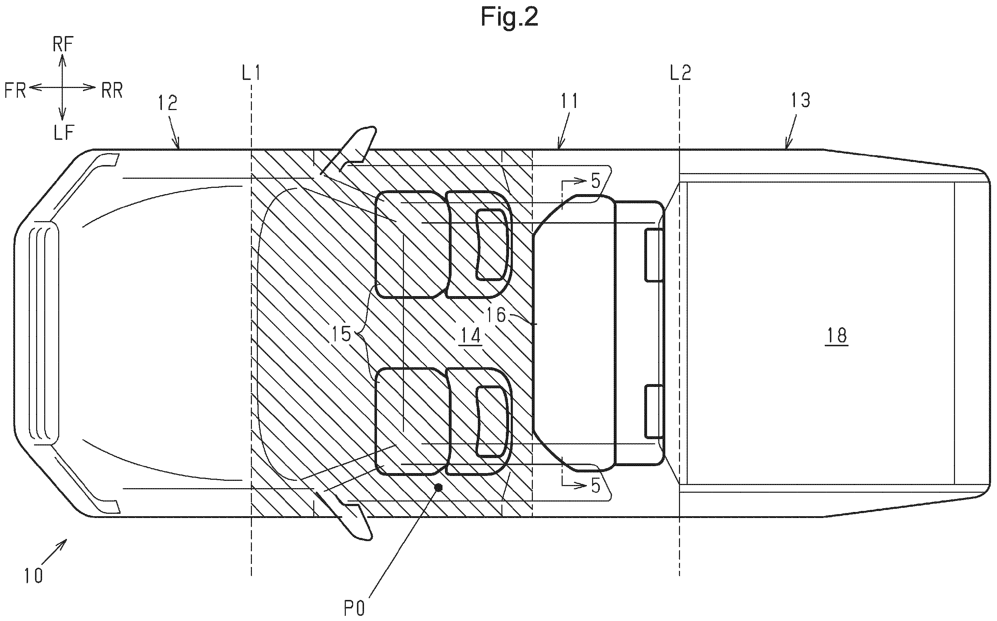

Fig. 2 shows the seat arrangement of the PHEV 10. Front-row seats 15 and a rear-row seat 16, which is positioned rearward (RR) of the front-row seats 15, are installed in the passenger compartment 14 of the PHEV 10. A hatched region P0 shown in Fig. 2 indicates a region in the passenger compartment 14 located forward (FR) of the rear-row seat 16 in the vehicle-forward direction FR. The region P0 corresponds to a region of the floor of the passenger compartment 14 where occupant's feet or the like are expected to be placed.

### Configuration of Drivetrain of the PHEV

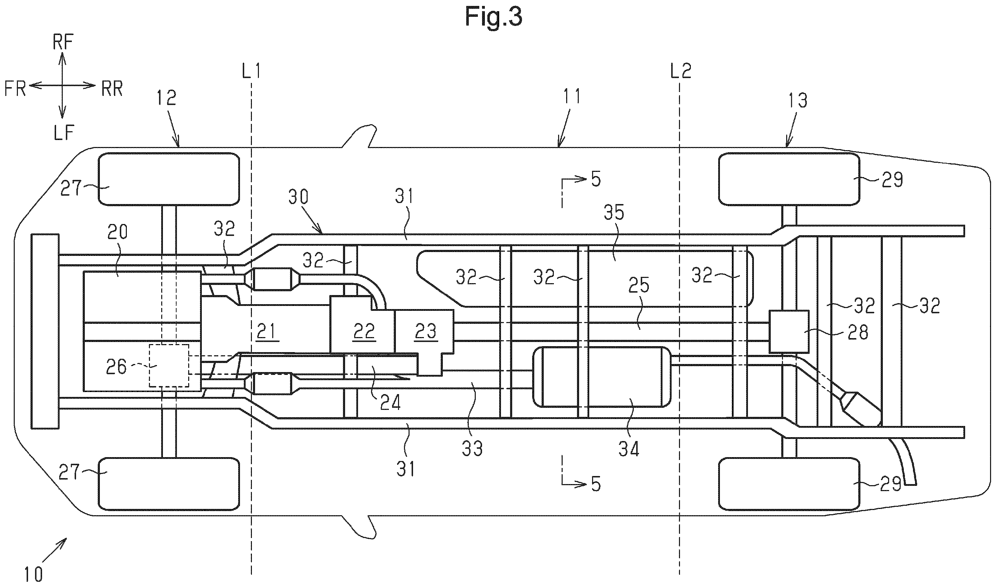

Next, the configuration of the drivetrain of the PHEV 10 will be described with reference to Fig. 3. The drivetrain of the PHEV 10 includes the engine 20, a transmission 21, a motor 22, and a transfer case 23. The drivetrain of the PHEV 10 includes propeller shafts 24 and 25 for the front and rear wheels, respectively. The propeller shafts 24 and 25 are each connected to the engine 20 via the transfer case 23, the motor 22, and the transmission 21. The propeller shaft 24 for the front wheels is connected to right and left front wheels 27 via a differential 26. The propeller shaft 25 for the rear wheels is connected to right and left rear wheels 29 via a differential 28.

### Configuration of Underfloor Structure of the PHEV

The configuration of the underfloor structure of the PHEV 10 will now be described with reference to Fig. 3. The space under the floor of the PHEV 10 refers to a region below (DW) floor panels of the passenger compartment 14 and the truck bed 18.

A frame 30 is provided under the floor of the passenger compartment 14 and the truck bed 18 of the PHEV 10. The frame 30 of the PHEV 10 of the present embodiment is a ladder-type frame having left and right side members 31 and multiple cross members 32 connecting the side members 31. The left and right side members 31 are each disposed so as to extend in the vehicle longitudinal direction through a region in the cabin section 11 that is below (DW) the passenger compartment 14. As shown in Fig. 3, the propeller shaft 25 for the rear wheel extends in the vehicle longitudinal direction through the region in the cabin section 11 that is below (DW) the passenger compartment 14.

Further, an exhaust pipe 33 that guides exhaust gas of the engine 20 rearward (RR) is disposed under the floor of the PHEV 10. The exhaust pipe 33 extends in the vehicle longitudinal direction through the region in the cabin section 11 that is below (DW) the passenger compartment 14. A muffler 34 is installed at an intermediate portion of the exhaust pipe 33. The muffler 34 is disposed in the region in the cabin section 11 that is below (DW) the passenger compartment 14. Further, a fuel tank 35 for storing fuel for the engine 20 is installed under the floor of the PHEV 10. The propeller shaft 25 for the rear wheels is disposed in a region between the exhaust pipe 33 and the fuel tank 35 in the vehicle width direction.

### Arrangement of Batteries and a High-Voltage Electrical Unit

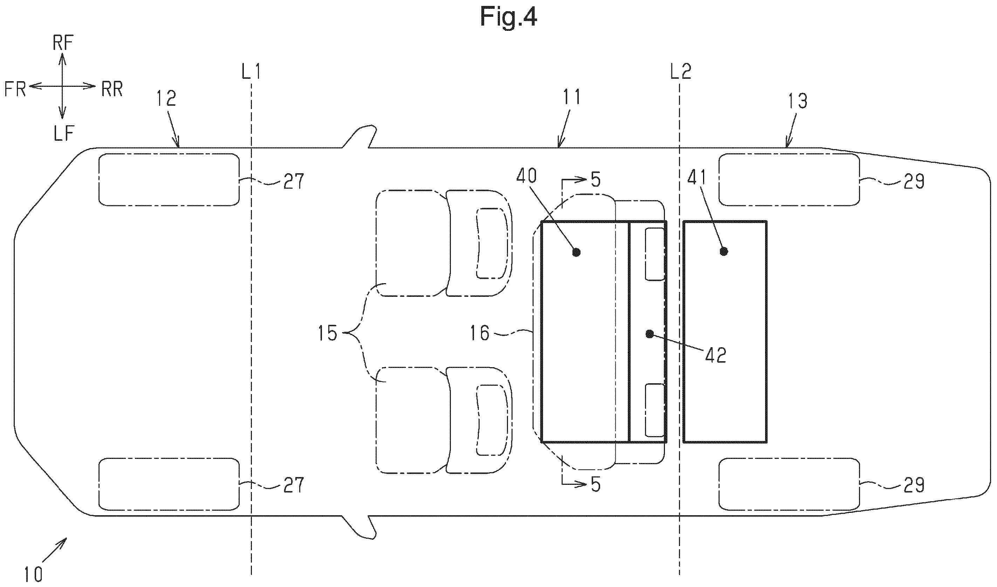

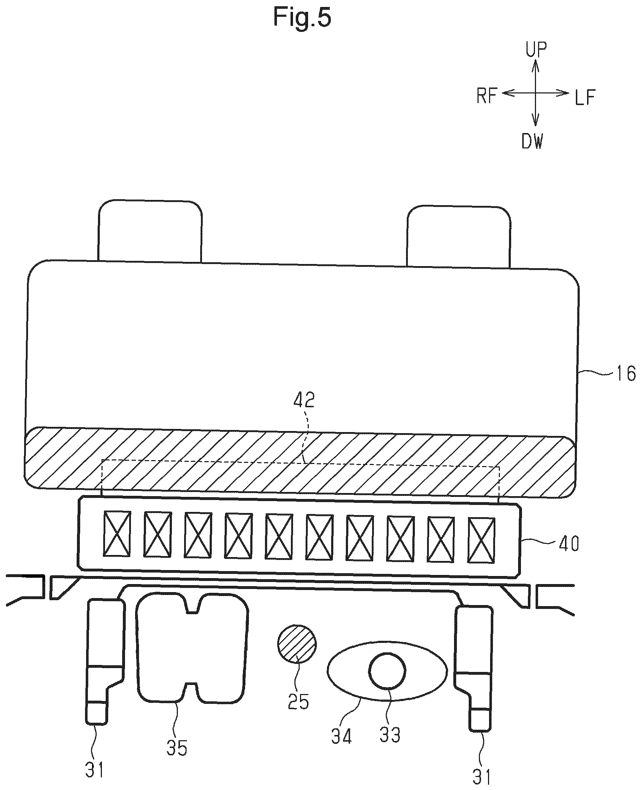

Next, the arrangement of batteries and a high-voltage electrical unit in the PHEV 10 will be described with reference to Figs. 4 and 5. Fig. 4 shows the arrangement of the batteries and the high-voltage electrical unit in the PHEV 10 as viewed from above (UP). Fig. 5 shows a schematic cross-sectional structure of the PHEV 10 taken along line 5-5 shown in Figs. 1 to 4.

The PHEV 10 has two batteries, which are a first battery 40 and a second battery 41. Each of the first battery 40 and the second battery 41 includes multiple cells and a case that accommodates the cells. The first battery 40 is installed in a region in the cabin section 11 that is below (DW) the rear-row seat 16 and above (UP) the propeller shaft 25 for the rear wheels, the exhaust pipe 33, the fuel tank 35, and the side members 31. The second battery 41 is disposed in a region in the cargo section 13 that is above (UP) the propeller shaft 25 for the rear wheels, the exhaust pipe 33, the fuel tank 35, and the side members 31.

The PHEV 10 includes a high-voltage electrical unit 42 electrically connected to the first battery 40 and the second battery 41. The high-voltage electrical unit 42 is a unit that is directly and electrically connected to the batteries and converts electric power input to and output from the batteries. The high-voltage electrical unit 42 includes an electric circuit for electric power conversion and a case that houses the electric circuit. Examples of the high-voltage electrical unit 42 include an electric power control unit that controls electric power of the motor 22 and a vehicle on-board charging unit that converts electric power supplied from the outside of the vehicle and supplies the converted electric power to the first battery 40 and the second battery 41. The high-voltage electrical unit 42 may be configured to have functions of both the electric power control unit and the vehicle on-board charging unit.

The high-voltage electrical unit 42 is disposed adjacent to the first battery 40. Specifically, as shown in Fig. 1, the high-voltage electrical unit 42 is installed in a region in the cabin section 11 located rearward (RR) of the rear-row seat 16, in a state abutting an upper surface (UP) of the first battery 40. In this case, the first battery 40 and the high-voltage electrical unit 42 are disposed so as to overlap with each other in the vehicle longitudinal direction and the vehicle width direction. The high-voltage electrical unit 42 is mechanically connected to the first battery 40 by fasteners such as bolts. As shown in Fig. 1, the first battery 40 and the high-voltage electrical unit 42 are electrically connected to each other via a bus bar 43. In the PHEV 10 of the present embodiment, the first battery 40 corresponds to the battery adjacent to the high-voltage electrical unit 42.

### Operation and Advantages of the Embodiment

Operation and advantages of the present embodiment will now be described.

In addition to the frame 30, components such as the propeller shaft 25, the exhaust pipe 33, and the fuel tank 35 are installed under the floor of the PHEV 10. Therefore, it is difficult to provide sufficient installation space beneath the floor of the PHEV 10 for the batteries and the high-voltage electrical unit 42. To address this, in the PHEV 10 according to the present embodiment, the first battery 40, the second battery 41, and the high-voltage electrical unit 42 are arranged in regions in the cabin section 11 and the cargo section 13 that are above (UP) the propeller shaft 25, the exhaust pipe 33, the fuel tank 35, and the side members 31 of the frame 30.

However, in such an arrangement, allocating space for the first battery 40, the second battery 41, and the high-voltage electrical unit 42 reduces the available space in the passenger compartment and truck bed 18. In contrast, in the PHEV 10 of the present embodiment, the high-voltage electrical unit 42 is disposed adjacent to the first battery 40, in the passenger compartment 14 of the cabin section 11. In the PHEV 10 of the present embodiment, the first battery 40 and the high-voltage electrical unit 42 are collectively disposed at one place. This configuration allows more passenger compartment space to be provided compared to an arrangement in which the high-voltage electrical unit 42 and the first battery 40 are installed in separate, spaced-apart locations within the passenger compartment 14.

The PHEV 10 of the present embodiment described above has the following advantages.
(1) In the PHEV 10 of the present embodiment, the first battery 40 and the high-voltage electrical unit 42 are disposed adjacent to each other in the region in the cabin section 11 above (UP) the propeller shaft 25, the exhaust pipe 33, the fuel tank 35, and the side members 31. Therefore, the PHEV 10 of the present embodiment facilitates providing installation space for the first battery 40 and the high-voltage electrical unit 42.
(2) When a component such as the first battery 40 is disposed in a region in the cabin section 11 that is above (UP) components such as the side members 31, the floor surface of the passenger compartment 14 in that region becomes stepped up relative to the reset of the floor of the passenger compartment 14. If the floor surface of the region P0 in the passenger compartment 14, which is forward (FR) of the rear-row seat 16, is raised, the occupant comfort may be impaired. In this regard, in the PHEV 10 of the present embodiment, the first battery 40, the second battery 41, and the high-voltage electrical unit 42 are disposed in regions other than the region forward (FR) of the rear-row seat 16. This configuration suppresses degradation of occupant comfort that might otherwise result from the installation of the first battery 40 and high-voltage electrical unit 42.
(3) If a single battery having a total capacity equivalent to the combined capacities of the first battery 40 and the second battery 41 were to be installed in the cabin section 11, the available passenger compartment space would be significantly reduced. Similarly, if a single battery having a total capacity equivalent to the combined capacities of the first battery 40 and the second battery 41 were to be installed in the cargo section 13, the available cargo space in the truck bed 18 would be significantly reduced. In contrast, the battery system of the PHEV 10 of the present embodiment is divided into the first battery 40, disposed in the cabin section 11, and the second battery 41, disposed in the cargo section 13. As a result, both passenger compartment space and cargo space in the truck bed 18 can be more readily maintained compared to a configuration employing a single integrated battery.
(4) In the PHEV 10 of the present embodiment, the high-voltage electrical unit 42 is disposed adjacent to the first battery 40 disposed in the cabin section 11. Vehicle on-board electric devices electrically connected to the high-voltage electrical unit 42 are often disposed in the cabin section 11 and the engine compartment section 12. Therefore, the length of the wiring connecting the high-voltage electrical unit 42 to the vehicle on-board electric devices can be shortened in some cases, as compared with a case in which the high-voltage electrical unit 42 is disposed adjacent to the second battery 41, which is disposed in the cargo section 13. For example, when the high-voltage electrical unit 42 functions as a power control unit for controlling the power supplied to the motor 22, the power line connected to the motor 22 can be shortened.
(5) The first battery 40 and the high-voltage electrical unit 42 are mechanically connected to each other by bolts or the like. Even when the position of the first battery 40 is moved by an external force due to a collision or the like, the high-voltage electrical unit 42 is highly likely to move integrally with the first battery 40. Therefore, even at the time of a collision or the like, the electrical connection between the first battery 40 and the high-voltage electrical unit 42 is unlikely to be interrupted. Further, this configuration reduces damage to the wiring connecting the first battery 40 and the high-voltage electrical unit 42 at the time of a collision.
(6) The first battery 40 and the high-voltage electrical unit 42 are electrically connected via the bus bar 43. Since the electrical connection between the first battery 40 and the high-voltage electrical unit 42 is not exposed externally, the configuration offers greater resistance to leakage current compared to a connection using wiring such as a wire harness.
(7) The high-voltage electrical unit 42 is disposed above (UP) the first battery 40. Accordingly, the high-voltage electrical unit 42 is less likely to be exposed to water in the event of submersion of the PHEV 10. Furthermore, the high-voltage electrical unit 42 is less likely to come into contact with the road surface when the vehicle travels over uneven terrain.

### Modifications

The above-described embodiment may be modified as follows. The above-described embodiment and the following modifications can be combined as long as the combined modifications remain technically consistent with each other.

### Arrangement of the High-Voltage Electrical Unit

The high-voltage electrical unit 42 may be disposed at a position different from that in the above-described embodiment as long as it is disposed adjacent to any one of the first battery 40 and the second battery 41.

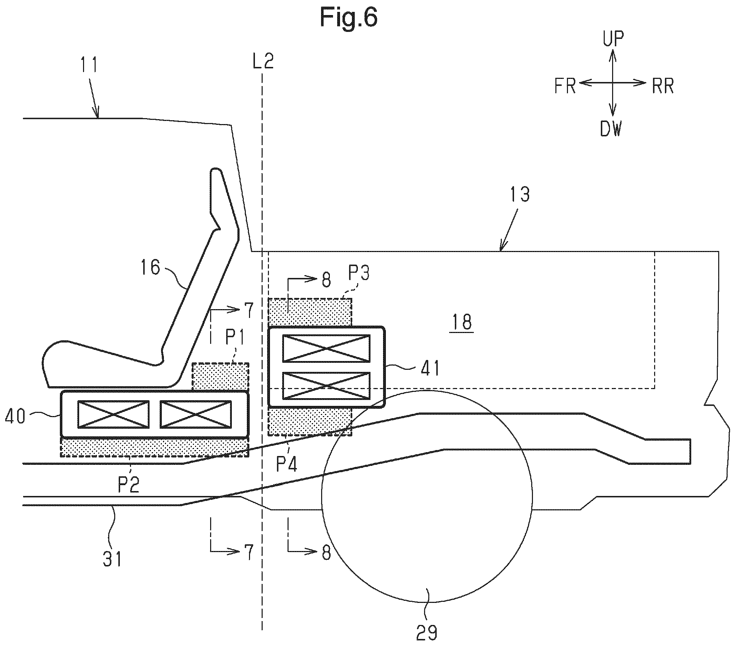

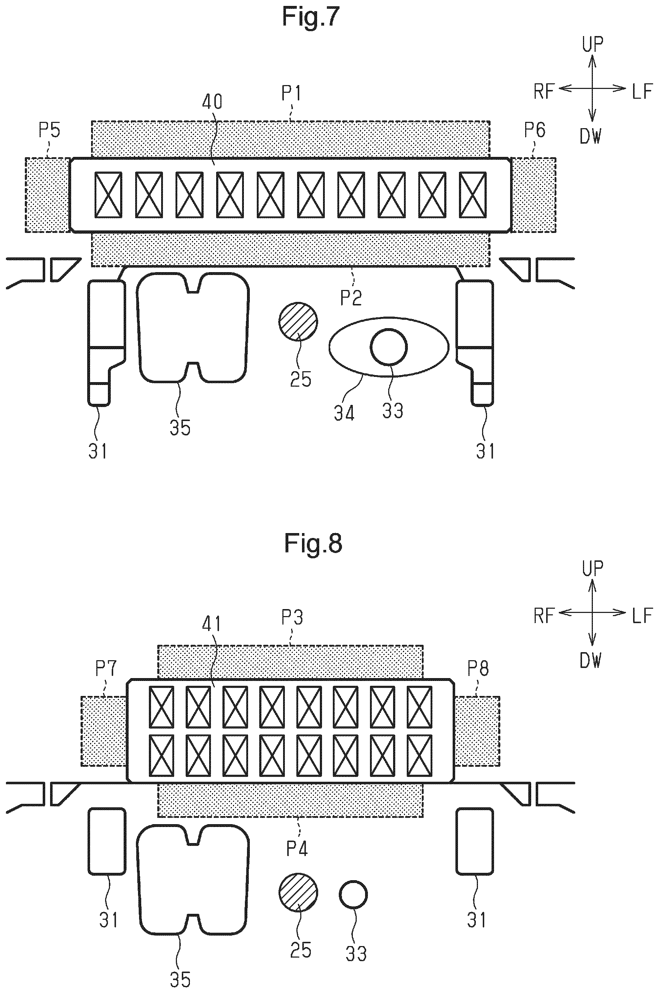

Regions P1 to P8 shown in Figs. 6 to 8 represent examples of locations where the high-voltage electrical unit 42 may be installed. The cross-sectional view of Fig. 7 corresponds to a cross section of the PHEV 10 taken along line 7-7 in Fig. 6. Also, the cross-sectional view of Fig. 8 corresponds to a cross section of the PHEV 10 taken along line 8-8 in Fig. 6.

The region P1 indicates an installation region in which the high-voltage electrical unit 42 is disposed above (UP) the first battery 40, as in the above-described embodiment. The region P2 indicates an installation region in which the high-voltage electrical unit 42 is disposed below (DW) the first battery 40. The region P3 indicates an installation region in which the high-voltage electrical unit 42 is disposed above (UP) the second battery 41. The region P4 indicates an installation region in which the high-voltage electrical unit 42 is disposed below (DW) the second battery 41. The region P5 indicates an installation region in which the high-voltage electrical unit 42 is disposed rightward (RF) of the first battery 40. The region P6 indicates an installation region in which the high-voltage electrical unit 42 is disposed leftward (LF) of the first battery 40. The region P7 indicates an installation region in which the high-voltage electrical unit 42 is disposed rightward (RF) of the second battery 41. The region P8 indicates an installation region in which the high-voltage electrical unit 42 is disposed leftward (LF) of the second battery 41.

Further, the high-voltage electrical unit 42 may be disposed in a region other than the regions P1 to P8 as long as that region is adjacent to the first battery 40 or the second battery 41. In any case, placing the high-voltage electrical unit 42 adjacent to either the first battery 40 or the second battery 41 allows the required installation space for the high-voltage electrical unit 42 to be reduced, compared to a configuration in which the high-voltage electrical unit 42 is positioned apart from both the first battery 40 and the second battery 41.

Preferably, the high-voltage electrical unit 42 is positioned so as to meet one or more of the following conditions (X) to (Z). Condition (X): the high-voltage electrical unit 42 overlaps the adjacent battery in the vehicle longitudinal direction. Condition (Y): the high-voltage electrical unit 42 overlaps the adjacent battery in the vehicle width direction. Condition (Z): the high-voltage electrical unit 42 overlaps the adjacent battery in the vehicle height direction. The above-described regions (A) to (D) correspond to regions that meet both condition (X) and condition (Y). The regions (E) to (H) correspond to regions that satisfy both condition (X) and condition (Z).

### Arrangement of the Fuel Tank

The shape and/or position of the fuel tank 35 may be changed. When the fuel tank 35 is not located below (DW) the first battery 40, it is sufficient that the first battery 40 is disposed in a region in the cabin section 11 that is above (UP) the propeller shaft 25 for the rear wheels, the exhaust pipe 33, and the side members 31.

In the PHEV 10 of the above-described embodiment, the exhaust pipe 33 and the fuel tank 35 are disposed on the opposite sides of the propeller shaft 25 for the rear wheels in the vehicle width direction. Both the exhaust pipe 33 and the fuel tank 35 may be located on the right side (RF) of the propeller shaft 25 for the rear wheels. Conversely, both the exhaust pipe 33 and the fuel tank 35 may be located on the left side (LF) of the propeller shaft 25 for the rear wheels.

### Arrangement of the Batteries

As described above, the arrangement of the high-voltage electrical unit 42 can be changed as long as the high-voltage electrical unit 42 is adjacent to either the first battery 40 or the second battery 41. When the high-voltage electrical unit 42 is disposed adjacent to the first battery 40, the arrangement of the second battery 41 in the cargo section 13 can be changed. Also, when the high-voltage electrical unit 42 is disposed adjacent to the first battery 40, the arrangement of the first battery 40 in the cabin section 11 can be changed.

Even when the high-voltage electrical unit 42 is disposed adjacent to the first battery 40, the position of the first battery 40 within the cabin section 11 may be changed, provided that the following condition is met: the first battery 40 is disposed in a region in the cabin section 11 that is above (UP) the propeller shaft 25 for the rear wheels and the side members 31. As long as this condition is met, for example, the first battery 40 may be positioned in the region P0 in the cabin section 11, which is forward (FR) of the rear-row seat 16.

Even when the high-voltage electrical unit 42 is disposed adjacent to the second battery 41, the position of the second battery 41 within the cargo section 13 may be changed, provided that the following condition is met: the second battery 41 is disposed in a region in the cargo section 13 that is above (UP) the propeller shaft 25 for the rear wheels and the side members 31.

In the PHEV 10 of the above-described embodiment, the battery system is divided into the first battery 40 installed in the cabin section 11 and the second battery 41 installed in the cargo section 13. The PHEV 10 may be configured to include a single battery installed in either the cabin section 11 or the cargo section 13.

### Other Modifications

The batteries and the high-voltage electrical unit 42 do not need to be mechanically connected to each other.

The batteries and the high-voltage electrical unit 42 may be electrically connected to each other using a member other than the bus bar 43, for example, a wire harness.

The PHEV 10 may also be equipped with an engine 20 having a cylinder arrangement other than the V type.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A pickup truck-type plug-in hybrid electric vehicle (10), comprising:
a fuel tank (35);
an engine (20);
a battery (40, 41);
a motor (22);
a transmission (21);
a propeller shaft (24, 25) connected to the engine (20) via the motor (22) and the transmission (21) and configured to transmit rotational driving force of the engine (20) and the motor (22) to a rear wheel (29);
an exhaust pipe (33) that guides exhaust gas of the engine (20) rearward in the vehicle (10);
a high-voltage electrical unit (42) electrically connected to the battery (40);
a cabin section (11) provided with a passenger compartment (14);
an engine compartment section (12) forward of the cabin section (11);
a cargo section (13) rearward of the cabin section (11); and
a frame (30) including left and right side members (31, 32) that extend in a vehicle longitudinal direction through a region in the cabin section (11) that is below the passenger compartment (14), wherein
the engine compartment section (12) includes an engine compartment (17) in which the engine (20) is arranged longitudinally,
the cargo section (13) includes a truck bed (18) that opens upward,
the propeller shaft (24, 25) and the exhaust pipe (33) extend in the vehicle longitudinal direction through the region in the cabin section (11) that is below the passenger compartment (14),
the battery (40, 41) is disposed in a region of at least one of the cabin section (11) and the cargo section (13) that is above the propeller shaft (24, 25), the exhaust pipe (33), and the side members (31, 32), and
the high-voltage electrical unit (42) is disposed adjacent to the battery (40, 41).

2. The plug-in hybrid electric vehicle (10) according to claim 1, wherein
a front-row seat (15) and a rear-row seat (16) that is disposed rearward of the front-row seat (15) are installed in the passenger compartment (14), and
the battery (40, 41) is disposed in a region of the plug-in hybrid electric vehicle (10) other than a region forward of the rear-row seat (16).

3. The plug-in hybrid electric vehicle (10) according to claim 1, wherein
a front-row seat (15) and a rear-row seat (16) that is disposed rearward of the front-row seat (15) are installed in the passenger compartment (14), and
the battery (40) is disposed in a region in the cabin section (11) that is below the rear-row seat (16).

4. The plug-in hybrid electric vehicle (10) according to claim 1, wherein the battery (41) is installed in the cargo section (13).

5. The plug-in hybrid electric vehicle (10) according to claim 1, wherein
the battery (40, 41) disposed adjacent to the high-voltage electrical unit (42) is one of a first battery (40) and a second battery (41) provided in the plug-in hybrid electric vehicle (10),
a front-row seat (15) and a rear-row seat (16) that is disposed rearward of the front-row seat (15) are installed in the passenger compartment (14),
the first battery (40) is disposed in a region in the cabin section (11) that is below the rear-row seat (16) and above the propeller shaft (24, 25), the exhaust pipe (33), and the side members (31, 32), and
the second battery (41) is disposed in a region in the cargo section (13) that is above the propeller shaft (24, 25), the exhaust pipe (33), and the side members (31, 32).

6. The plug-in hybrid electric vehicle (10) according to any one of claims 1 to 4, wherein the high-voltage electrical unit (42) is disposed above the battery (40, 41).

7. The plug-in hybrid electric vehicle (10) according to any one of claims 1 to 4, wherein the fuel tank (35) is disposed below the battery (40, 41).

8. The plug-in hybrid electric vehicle (10) according to any one of claims 1 to 4, wherein the battery (40, 41) and the high-voltage electrical unit (42) are mechanically connected to each other.

9. The plug-in hybrid electric vehicle (10) according to any one of claims 1 to 4, wherein the battery (40, 41) and the high-voltage electrical unit (42) are electrically connected to each other by a bus bar (43).

10. The plug-in hybrid electric vehicle (10) according to any one of claims 1 to 4, wherein the high-voltage electrical unit (42) is a power control unit that performs power control of the motor (22).

11. The plug-in hybrid electric vehicle (10) according to any one of claims 1 to 4, wherein the high-voltage electrical unit (42) is vehicle (10) on-board charging unit that converts electric power supplied from outside the vehicle (10) and supplies the converted electric power to the battery.

12. The plug-in hybrid electric vehicle (10) according to any one of claims 1 to 11, wherein the propeller shaft (24, 25) is disposed in a region between the exhaust pipe (33) and the fuel tank (35) in a vehicle width direction.

13. The plug-in hybrid electric vehicle (10) according to any one of claims 1 to 12, wherein the engine (20) has a V-type cylinder arrangement.
